# EUROPÄISCHE PATENTANMELDUNG

(11) **EP 2 340 713 A2**
(43) Veröffentlichungstag der Anmeldung: **06.07.2011**
(21) Anmeldenummer: 10400063.3
(22) Anmeldetag: 15.12.2010
(51) Int. Cl.: A01N 57/00, A01N 59/26, A01P 1/00

(54) **Präparat zur Behandlung von Kohlpflanzen**

(30) Priorität: 18.12.2009 DE 102009060114
(71) Anmelder: Tilco Biochemie GmbH, 23858 Reinfeld (DE)
(72) Erfinder: Scharafat, Iradj, Dr., 23843 Travenbrück (DE)
(74) Vertreter: Klickow, Hans-Henning

(57) **Zusammenfassung**

Das Präparat dient zur Behandlung von Pflanzenkrankheiten an Kohlpflanzen, insbesondere zur Behandlung der Kohlhernie. Als Wirkstoff ist mindestens eine Phosphor enthaltende Säure und/oder mindestens ein Salz mindestens einer Phosphor enthaltenden Säure enthalten.

## Beschreibung

Die vorliegende Erfindung betrifft ein Präparat zur Behandlung von Kohlpflanzen, insbesondere zur Behandlung der Kohlhernie.

Die betreffende Pflanzenkrankheit ist weltweit verbreitet und führt zu erheblichen Schäden an den Kohlpflanzen und zu entsprechenden Ernteausfällen. Ein wirksames Mittel zur Behandlung der Kohlpflanzen ist bislang nicht bekannt.

Aufgabe der vorliegenden Erfindung ist es, ein Präparat bereitzustellen, das mit einer hohen Wirksamkeit dafür in der Lage ist, die Kohlhernie zu behandeln bzw. einem Auftreten der Kohlhernie vorzubeugen.

Erfindungsgemäß wurde nunmehr überraschenderweise gefunden, dass die nachfolgend aufgeführten Substanzen einzeln oder in Kombination miteinander eine erhebliche Wirkung gegen diese Krankheit entfalten.

Das erfindungsgemäße Präparat kann unmittelbar zur Behandlung der Pflanzenkrankheit angewendet werden. Ergänzend oder alternativ ist auch eine Anwendung als Pflanzenstärkungsmittel, Impfstoff oder Fungizid möglich.

Gedacht ist alternativ oder ergänzend auch an Anwendungen bei anderen Kulturpflanzen, insbesondere im Ackerbau, Gemüsebau, bei Heilpflanzen und/oder Gewürzen.

Die Kohlhernie wird üblicherweise als Plasmodiophora brassicae bezeichnet.

Die Anwendung kann in Kombination mit Algenextrakten erfolgen, beispielsweise mit Braunalgenextrakt. Eine Aufbringung kann flüssig, fest, in Form von Pasten oder als Granulat erfolgen.

Erfindungsgemäß besitzt das Präparat mindestens eine der nachfolgenden Substanzen als Bestandteil. Bevorzugt ist auch daran gedacht, mindestens zwei der nachfolgend aufgeführten Substanzen bei der Herstellung des Präparates miteinander zu kombinieren.
1. Phosphor-Säuren und/oder Salze von Phosphorsäuren
2. Salze der Phosphate (org. und anorganische), Phosphorsäure
3. Salze der Polyphosphate (organische und organische)oder Pyrophosphate
4. Salze der Phosphonate (org. und anorganische), Phosphonsäure
5. Salze der Polyphosphonate (organische und organische) oder Pyrophosphonate
6. Obengenannte Säuren und/oder Salze in Kombination mit Algen und/oder Algenextrakten aller Art
7. Obengenannte Säuren und/oder Salze in Kombination mit Aminosäuren
8. Obengenannte Säuren und/oder Salze in Kombination mit Fungiziden
9. Obengenannte Säuren und Salze in Kombination mit Huminsäuren und/oder deren Salze oder Silikate
10.Obengenannte Säuren und/oder Salze in Kombination mit Melasse und/oder Vinasse und/oder anderen pflanzlichen Land- und/oder Wasserpflanzen
11.Obengenannte Säuren und/oder Salze in Kombination mit Gemischen von mindestens einer weiteren der oben aufgeführten Substanzen.

Bei der Verwendung von Algenextrakten ist insbesondere daran gedacht, diese in einem aufgeschlossenen Zustand zu verwenden. Das Aufschließen kann in Form einer thermischen Behandlung eines Gemisches der Algensubstanz mit anderen organischen oder anorganischen Stoffen erfolgen. Typischerweise wird das aufgeschlossene Produkt granuliert.

Bei einer Anwendung im Zusammenhang mit Rapspflanzen erweist sich eine Anwendungsmenge von 1,0 bis 2,0 l/ha als vorteilhaft. Die Anwendung sollte einmal mit dieser Menge je Hektar im Herbst und einmal im Frühjahr erfolgen.

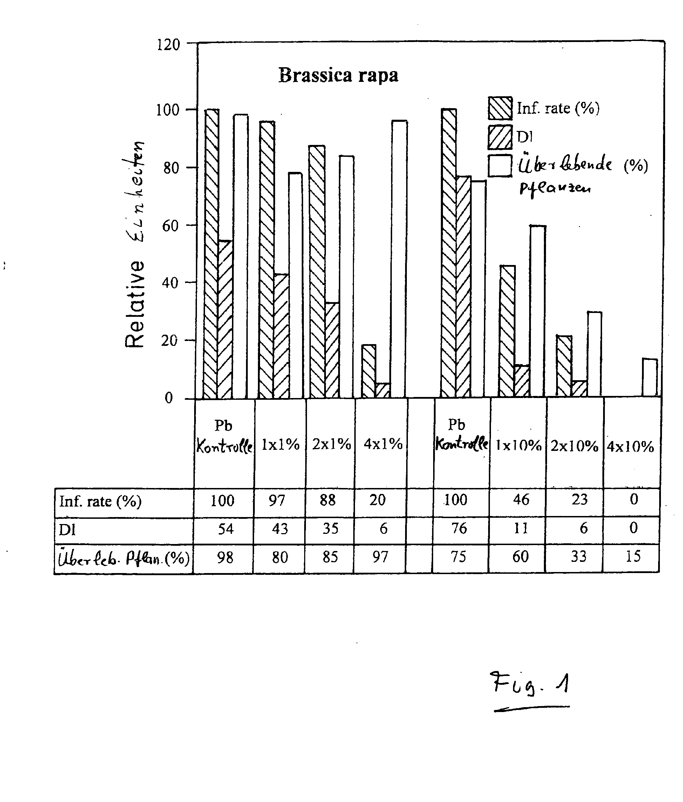

Fig. 1 zeigt eine Grafik mit tabellarischer Datenzusammenstellung für eine Anwendung im Zusammenhang mit Chinakohl. Bei einer Anwendung, bei der das Präparat in einer Verdünnung mit 99 Anteilen Wasser und einem Anteil Präparat aufgesprüht wurde, zeigt sich bei einer einmaligen Anwendung noch kein Effekt. Bei einer mehrmaligen Wiederholung mit dieser Konzentration kann jedoch bereits eine Wirksamkeit erkannt werden.

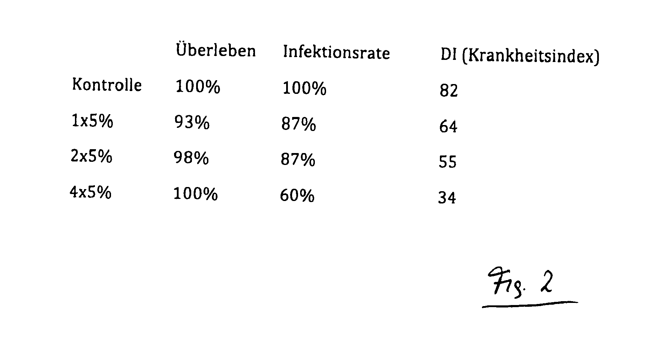

In einer Verdünnung von 95% Anteilen Wasser und 5% Präparat ergibt sich eine unmittelbare Wirksamkeit. Zum Vergleich wurden Pflanzen jeweils lediglich einmal, zweimal, dreimal und viermal besprüht. Die jeweiligen Behandlungen erfolgten im Abstand von jeweils einer Woche. Die Tabelle in Fig. 2 faßt die Ergebnisse zusammen. Der Krankheitsindex kennzeichnet die Stärke der jeweiligen Infektion der Pflanzen. Ein abnehmender Krankheitsindex dokumentiert hierbei eine abnehmende Krankheitsintensität.

Das Präparat selbst in einem unverdünnten Zustand besteht zu einem Anteil von 1 bis 30% aus Algenextrakt, zu einem Anteil von 1 bis 30% aus tierischen und/oder pflanzlichen Aminosäuren und zu einem Anteil von 2 bis 60% aus einem Phosphor enthaltenden Anteil, beispielsweise Phosphonsäure, ein Salz der Phosphonsäure, Phosphorsäure oder einem Salz der Phosphorsäure einschließlich von Phosphaten, Pyrophosphaten sowie Polyphosphaten. Insbesondere ist daran gedacht, das Präparat mit einem Anteil von 2 bis 60% an Phosphonsäure sowie Salzen der Phosphonsäure sowie zusätzlich mit einem Anteil von 2 bis 40% von Phosphorsäure und/oder Salzen der Phosphorsäure einschließlich der Phosphate, Pyrophosphate sowie Polyphosphate bereitzustellen.

In den Zeichnungen sind Ausführungsbeispiele der Erfindung schematisch dargestellt. Es zeigen:
- Fig. 1: eine grafische und tabellarische Zusammenstellung für eine Versuchsdurchführung im Zusammenhang mit Chinakohl und
- Fig. 2: eine tabellarische zusammenstellung der Versuchsergebnisse.

## Patentansprüche

1. Präparat zur Behandlung von Pflanzenkrankheiten an Kohlpflanzen, insbesondere zur Behandlung der Kohlhernie, **dadurch gekennzeichnet, dass** als Wirkstoff mindestens eine Phosphor enthaltende Säure und/oder mindestens ein Salz mindestens einer Phosphor enthaltenden Säure enthalten ist.

2. Präparat nach Anspruch 1, **dadurch gekennzeichnet, daß** mindestens eine Algensubstanz enthalten ist.

3. Präparat nach Anspruch 1, **dadurch gekennzeichnet, daß** mindestens eine Algenextrakt enthalten ist.

4. Präparat nach Anspruch 3, **dadurch gekennzeichnet, daß** das Algenextrakt aufgeschlossen ist.

5. Präparat nach Anspruch 1, **dadurch gekennzeichnet, daß** mindestens eine Aminosäure enthalten ist.

6. Präparat nach Anspruch 1, **dadurch gekennzeichnet, daß** mindestens ein Fungizid enthalten ist.

7. Präparat nach Anspruch 1, **dadurch gekennzeichnet, daß** mindestens eine Huminsäure enthalten ist.

8. Präparat nach Anspruch 1, **dadurch gekennzeichnet, daß** mindestens ein Silikat enthalten ist.

9. Präparat nach Anspruch 1, **dadurch gekennzeichnet, daß** mindestens Melasse enthalten ist.

10. Präparat nach Anspruch 1, **dadurch gekennzeichnet, daß** mindestens Vinasse enthalten ist.

11. Präparat nach Anspruch 1, **dadurch gekennzeichnet, daß** mindestens ein Zuckerrübenbestandteil enthalten ist.
